# NOUVEAU FASCICULE DE BREVET EUROPEEN

(11) **EP 3 512 691 B2**
(45) Date de publication et mention de la décision concernant l'opposition: **28.02.2024**
(45) Mention de la délivrance du brevet: 16.12.2020
(21) Numéro de dépôt: 17754414.5
(22) Date de dépôt: 27.07.2017
(51) Int. Cl.: B29C 65/00, B29C 65/02, B29C 43/18, B29C 70/40, B29C 70/86, B29C 69/00, B62D 29/00, B29C 45/14, B29L 31/30, B29K 705/00, B29C 65/16, B62D 25/04

(54) **PROCÉDÉ DE FABRICATION AMÉLIORÉ D'UNE PIÈCE DE STRUCTURE HYBRIDE DE VÉHICULE AUTOMOBILE ET PIÈCE DE STRUCTURE HYBRIDE CORRESPONDANTE**
VERBESSERTES VERFAHREN ZUR HERSTELLUNG EINES HYBRIDSTRUKTURTEILS EINES KRAFTFAHRZEUGES UND ENTSPRECHENDES HYBRIDSTRUKTURTEIL
IMPROVED METHOD FOR MANUFACTURING A HYBRID STRUCTURAL PART OF A MOTOR VEHICLE AND CORRESPONDING HYBRID STRUCTURAL PART

(30) Priorité: 16.09.2016 FR 1658668
(43) Date de publication de la demande: 24.07.2019
(73) Titulaire: Compagnie Plastic Omnium, 69007 Lyon (FR)
(72) Inventeur: ROCHEBLAVE, Laurent, 69100 Villeurbanne (FR)
(74) Mandataire: LLR
(86) Numéro de dépôt international: PCT/FR2017/052099
(87) Numéro de publication internationale: WO 2018/050976

(56) Documents cités:
- WO-A1-2016/083007
- FR-A1- 3 030 356
- US-A1- 2015 298 399

## Description

L'invention a pour objet un procédé de fabrication d'une pièce de structure hybride de véhicule automobile formée par l'assemblage de plusieurs matériaux différents, tels que des éléments métalliques, des matériaux polymères et des fibres de renfort, dans le but de conférer à la pièce des caractéristiques mécaniques particulières.

En effet, certains éléments de structure d'un véhicule automobile sont particulièrement sollicités lors d'un choc. Ils doivent pouvoir apporter la rigidité et la résistance nécessaire pour soutenir les efforts, absorber une partie de l'énergie afin de préserver l'intégrité du véhicule, et assurer la sécurité des passagers. C'est le cas par exemple de pièces de structure telles que le pied milieu, le longeron extérieur longitudinal, la traverse de pavillon, la poutre de choc ou, potentiellement, de tout autre élément structurel du véhicule.

Ces éléments de structure doivent également être suffisamment résistants pour supporter localement diverses fonctions mécaniques. A titre d'exemple, le pied milieu automobile, qui est fortement sollicité lors d'un choc latéral, doit aussi assurer à la fois le maintien de la porte arrière via des charnières et la tenue de la porte avant via le système de fermeture de celle-ci.

Les pièces de structures hybrides permettent également, à résistance mécanique égale, de faire un gain de poids substantiel de l'ordre de 30%, par rapport à des pièces métalliques conventionnelles, tout en améliorant les propriétés d'amortissement des chocs.

La publication EP1 550 604 propose un procédé de fabrication d'une pièce de structure hybride dans lequel on met en forme un élément de structure métallique préalablement enduit d'un revêtement de surface réactivable à chaud. On rapporte ensuite par moulage une matière thermoplastique formant des nervures sur la face de l'élément de structure métallique comportant le revêtement de surface. Cette pièce de structure hybride manque toutefois de résistance au choc en ce qu'elle ne comporte pas de moyens de renforcement comprenant des fibres.

On connaît aussi le cas d'une structure hybride comprenant un matériau composite, et des moyens de renforcement formés d'une couche de fibres imprégnées dans une matrice polymère. Cette couche de fibres est en règle générale formée de fibres unidirectionnelles continues, et comprend éventuellement une ou plusieurs couches supplémentaires de fibres tissées. La couche de matériau composite est mise en forme, de préférence par estampage à chaud, directement dans l'élément de structure métallique préformé, après l'application d'une couche intercalaire de matériau de liaison.

Les éléments de rigidification, en forme de nervures, sont ensuite réalisés par moulage d'un matériau polymère thermoplastique ou thermodurcissable, de préférence dans le même moule que celui utilisé à l'étape d'estampage. Le matériau composite recouvre tout ou partie de ladite face de l'élément de structure métallique, et le matériau polymère peut alors recouvrir tout ou partie du matériau composite, et une partie des espaces de l'élément de structure métallique laissés libres par la nappe de matériau composite. Ce procédé permet d'obtenir des pièces de grande qualité.

Toutefois, il est nécessaire de prendre de nombreuses précautions pour éviter que le matériau composite ne soit déplacé pendant le moulage du matériau polymère lorsque cette opération s'effectue par injection, en particulier lorsque la pièce de matériau composite ne recouvre que très partiellement la surface de la structure métallique.

Le document FR3030356 A1 décrit un procédé de fabrication d'une pièce de structure hybride de véhicule automobile, comprenant les étapes suivantes : (a) mise en forme d'une nappe de matériau métallique, (b) fourniture d'une nappe de matériau composite comprenant au moins une couche de fibres imprégnée ou noyée dans une matrice polymère, ladite couche de fibres étant choisie parmi une couche de fibres unidirectionnelles et une couche de fibres tissées, (c) application d'une couche de matériau de liaison sur une face de ladite nappe de matériau métallique, avant ou après sa mise en forme, ou sur une face de ladite nappe de matériau composite, (d) formation d'un élément hybride par mise en forme de ladite nappe de matériau composite à la forme de ladite nappe de matériau métallique et solidarisation de la nappe de matériau composite à la nappe de matériau métallique au moyen de ladite couche de matériau de liaison, (e) réalisation d'éléments de rigidification par surmoulage d'au moins une partie de l'élément hybride ainsi formé en utilisant un matériau polymère afin de former une pièce de structure hybride.

L'invention a pour objet de proposer un procédé de réalisation d'une pièce de structure hybride permettant d'obtenir une grande facilité d'adaptation dans la disposition des matériaux les uns par rapport aux autres, en particulier, en autorisant la dépose des composants de manière localisée, à l'aide par exemple d'un robot. Ce procédé permet également de réduire le nombre d'étapes de réalisation dans le but de réduire les coûts.

Le procédé de fabrication d'une pièce de structure hybride de véhicule automobile selon la revendication 1.

Les bandes de renfort formées de fibres continues unidirectionnelles et formant des moyens de renforcement additionnels localisés, sont déposées après le moulage de la couche de matériau thermoplastique ou thermodurcissable, dans la position précise désirée. L'opération de moulage, en particulier lorsqu'elle est réalisée par injection, peut alors s'opérer à cadence élevée sans qu'il soit nécessaire de prévoir des moyens spécifiques pour maintenir les bandes de renfort dans le moule d'injection.

Le procédé selon l'invention peut aussi comprendre isolément, ou en combinaison, les caractéristiques suivantes :
- Dans le cas où la première couche moulée est une nappe composite composée de fibres imprégnées dans une matrice polymère de matériau thermoplastique ou thermodurcissable mise en forme à chaud dans la pièce de métal, on met en forme la nappe composite par thermocompression ou par estampage à chaud de ladite nappe composite dans la pièce de métal.
- Le matériau thermoplastique ou thermodurcissable moulée est un matériau chargé de fibres.
- La pièce de métal comprend un ou plusieurs orifices, permettant, au cours de l'étape b, au matériau moulé formant la première ou la deuxième couche moulée de matériau thermoplastique ou thermodurcissable de s'écouler d'une face à une autre, de sorte que les couches de matériau thermoplastique ou thermodurcissable moulées recouvrant chacune des faces de la pièce de métal sont en continuité de matière au niveau desdits orifices.
- La couche moulée de matériau thermoplastique ou thermodurcissable moulée recouvrant une des faces de la pièce de métal forme des nervures de renforcement.
- Au cours de l'étape c, on dépose les bandes de renfort sur la face de la pièce de métal opposée à la face comportant des nervures de renforcement.
- Des bandes de renfort sont superposées partiellement ou en totalité les unes sur les autres.
- Les matériaux formant la couche moulée et la matrice polymère enrobant les fibres continues unidirectionnelles de la bande de renfort sont des matériaux compatibles et, au cours de l'étape c, on porte la surface de ladite couche moulée à une température proche de la température de fusion, et la surface des bandes de renfort à une température proche de la température de fusion de sorte que la couche moulée et les bandes de renfort sont liées par soudure.
- On réalise l'étape c dans un laps de temps très court suivant la réalisation de l'étape b.
- La pièce de métal comporte des enfoncements localisés ou des emboutis de renforcement à la surface desquels, au cours de l'étape c, on dépose lesdites bandes de renfort.
- Préalablement à la réalisation de l'étape b, on recouvre au moins une face de la pièce de métal d'une couche de liaison.
- La couche de liaison est formée par une couche de matériau polymère compatible chimiquement avec le matériau formant la couche moulée.
- Préalablement à l'étape a ou b, on procède à un traitement de la surface de la feuille de métal de manière à créer des aspérités.

L'invention concerne également une pièce de structure hybride de véhicule automobile, pouvant être obtenue en mettant en oeuvre le procédé selon l'une quelconque des caractéristiques énoncées ci-dessus, caractérisée en ce qu'elle comprend une pièce de métal mise en forme, recouverte sur tout ou partie de la surface d'au moins une de ses faces d'une couche moulée formée d'un matériau thermoplastique ou thermodurcissable sur laquelle sont déposées localement des bandes de renfort formées de fibres continues unidirectionnelles enrobées dans une matrice polymère.

Préférentiellement, la pièce de métal comprend des orifices, de sorte que les couches moulées recouvrant chacune des faces de la pièce de métal sont en continuité de matière au niveau desdits orifices.

L'invention sera mieux comprise à la lecture des figures annexées, qui sont fournies à titre d'exemples et ne présentent aucun caractère limitatif, dans lesquelles :
- La figure 1 représente une vue schématique d'une structure hybride de véhicule automobile telle qu'un pied milieu.
- La figure 2 est une coupe schématique de la structure hybride en A-A, illustrant une première alternative de réalisation d'un premier mode de mise en œuvre de réalisation de l'invention.
- La figure 3 est une coupe schématique en A-A, illustrant une alternative d'exécution non couverte par l'invention.
- La figure 4 est une coupe schématique en A-A, illustrant une deuxième alternative d'exécution du premier mode de mise en œuvre de l'invention.
- La figure 5 est une vue schématique, selon une troisième alternative d'exécution du premier mode de mise en œuvre de l'invention.
- La figure 6 est une coupe schématique en B-B, selon une première alternative d'exécution d'un second mode de mise en œuvre de l'invention.
- La figure 7 est une coupe schématique en B-B, selon une deuxième alternative d'exécution du second mode de mise en œuvre de l'invention.
- La figure 8 est une coupe schématique selon B-B illustrant une troisième alternative d'exécution du second mode de mise en œuvre de l'invention.
- La figure 9 est une coupe schématique selon B-B illustrant une quatrième alternative d'exécution du second mode de mise en œuvre de l'invention.
- La figure 10 est une coupe schématique selon B-B illustrant un troisième mode d'exécution de mise en œuvre de l'invention.

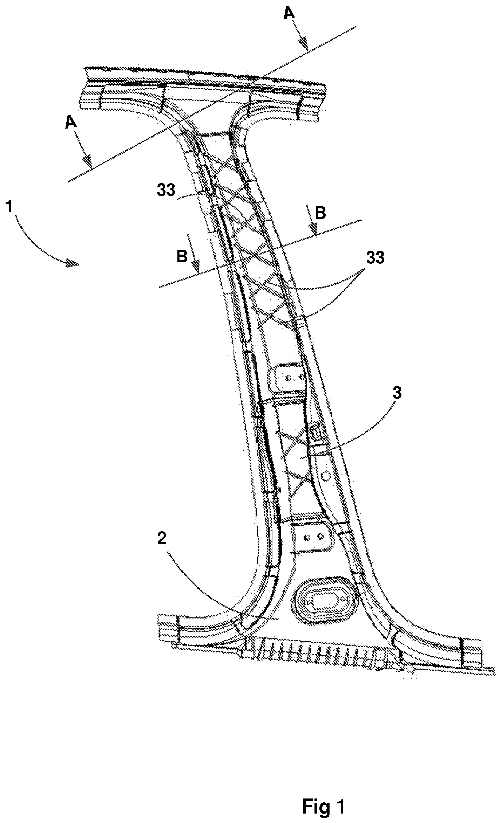

Le pied milieu 1 représenté à la figure 1 comprend une pièce de métal 2 mise en forme, sur laquelle est moulée une couche de matériau thermoplastique ou thermodurcissable 3. Des nervures en matériau thermoplastique ou thermodurcissable 33, issues de la même opération de moulage et en continuité de matière avec la couche moulée, sont disposées localement pour renforcer la structure de la pièce de métal 2 en augmentant l'inertie totale de la structure hybride. Lorsque la pièce de métal 2 présente une concavité, les nervures en matériau thermoplastique ou thermodurcissable sont avantageusement disposées à l'intérieur de la concavité, de manière à limiter une ouverture ou une fermeture importante de la concavité sous l'effet d'un choc. Les nervures 33 peuvent avoir une orientation longitudinale ou transversale ou encore former des croisillons comme cela est illustré à la figure 1.

La mise en forme, à l'étape a, de la nappe de métal servant à réaliser la pièce de métal 2 se fait de préférence par emboutissage, à froid ou à chaud. La nappe de métal se présente sous la forme d'une tôle dont l'épaisseur est comprise entre 0,1 mm et 1,5 mm, et plus généralement entre 0,5 mm et 1 mm. Cette nappe de métal peut indifféremment être en aluminium, en magnésium, en titane, ou formée d'un alliage d'un ou de plusieurs de ces métaux. Plus couramment, on choisira un alliage à base de fer, par exemple en acier ou en acier inoxydable, et de préférence un matériau métallique emboutissable à froid.

Le moulage, ou le surmoulage, de la couche de matériau thermoplastique ou thermodurcissable 3, à l'étape b, peut se faire selon plusieurs variantes d'exécution de l'invention.

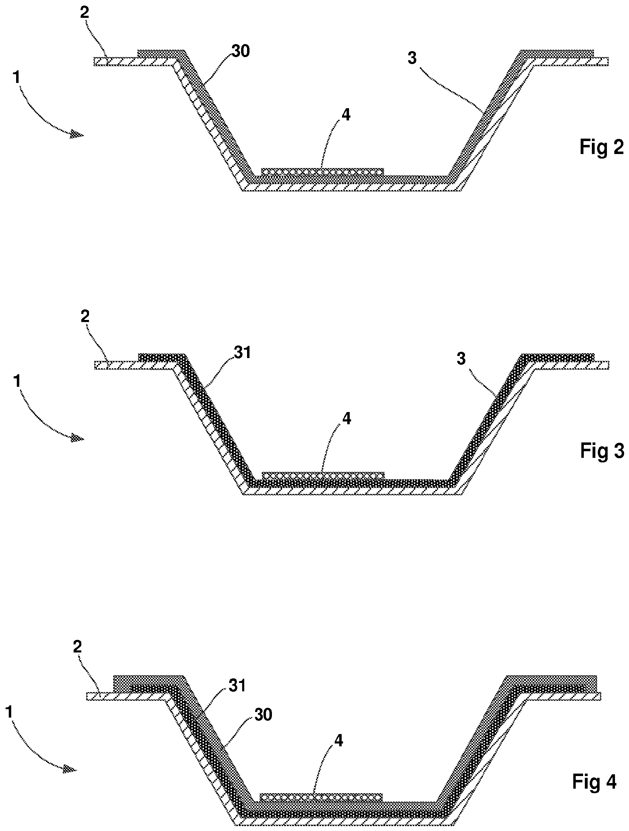

Une première alternative d'exécution d'un premier mode de réalisation de l'invention, illustrée à la figure 2, consiste à réaliser une première couche moulée par injection de matériau thermoplastique 30 dans un moule dont la géométrie est adaptée pour recevoir la pièce de métal 2 obtenue à l'issue de l'étape de mise en forme de la nappe de métal. La couche moulée 30 de matériau thermoplastique recouvre tout ou partie de la surface de la pièce de métal 2. Comme on le verra par la suite, dans un second mode de mise en œuvre de l'invention, cette couche peut aussi recouvrir tout ou partie de chacune des faces de la pièce de métal 2.

Avantageusement, des fibres coupées disposées de manière aléatoire peuvent être ajoutées au matériau thermoplastique ou thermodurcissable avant l'injection, afin d'obtenir des éléments de rigidification plus résistants. Lesdites fibres peuvent être choisies parmi les fibres de verre, les fibres de carbone, les fibres de basalte, des fibres métalliques, les fibres aramides ou un mélange de ces fibres.

Le matériau polymère thermoplastique peut être choisi parmi les polyamides aliphatiques (PA), les polyphtalamides (PPA), le polybutylène téréphtalate (PBT), le polyéthylène téréphtalate (PET), les polycarbonates (PC), voire le polypropylène (PP) et leurs mélanges. A titre d'exemple, on peut utiliser du polyamide 66 (PA66), ou encore du polyamide 6 (PA6).

Le matériau polymère thermodurcissable peut être choisi parmi une résine polyester, vinylester, epoxy, polyuréthane ou leur mélange.

Une fois l'opération d'injection ou de thermocompression achevée, on extrait la pièce de métal 2 recouverte de la couche de matériau thermoplastique ou thermodurcissable 30 du moule, et on procède, à l'étape c, au dépôt d'une ou plusieurs bandes de renfort 4 composées de fibres continues unidirectionnelles 4 enrobées dans une matrice polymère.

Comme précédemment, le choix de la fibre du renfort 4 s'opère parmi les fibres de renforcement les plus courantes telles que les fibres de verre, les fibres de carbone, les fibres de basalte, les fibres métalliques, les fibres aramides, ou leur mélange. Ces fibres peuvent être des fibres monobrins ou plus généralement des fils toronnés de manière à améliorer la résistance mécanique de la pièce.

Les fibres unidirectionnelles sont parallèles entre elles et sont généralement alignées par rapport à la direction principale de la pièce de structure 1 à réaliser.

De préférence, on choisira une matrice polymère identique ou compatible avec le matériau formant la couche moulée 3, dans la mesure où ces deux composants sont destinés à être assemblés pour former une pièce de résistance mécanique unique.

Ainsi, à titre d'exemple, à une matrice polymère en polypropylène formant la couche moulée on associera une matrice polymère également en polypropylène pour enrober les fibres continues de la bande renfort.

Et, à une couche moulée formée d'une matrice polymère en epoxy on associera des bandes de renfort formée d'une matrice en polyamide. Enfin, à une couche moulée formée d'une matrice polymère en polyester ou en vinylester on associera des bandes de renfort formée d'une matrice en polybutylène térephtalate (PBT).

Encore plus préférentiellement, pour la matrice polymère servant à réaliser la couche 3 et les nervures 33, et pour la matrice polymère enrobant les fibres continues unidirectionnelles de la bande de renfort 4, on choisira des matériaux thermoplastiques de manière à autoriser une jonction par soudage entre lesdites matrices polymères de ces deux composants. Cette compatibilité est assurée en choisissant des matériaux issus d'une même famille de thermoplastiques.

Dans l'exemple illustré à la figure 2 la première couche moulée 3 de matériau thermoplastique ou thermodurcissable recouvre partiellement la pièce de métal 2, et la bande de renfort 4 est disposée dans le fond de la concavité de la pièce de métal 2. La position de la bande 4 de renfort est ainsi ajustée avec précision.

On remarquera à ce stade qu'il est possible de disposer une ou plusieurs bandes de renfort 4. Les fibres unidirectionnelles continues de chacune des bandes peuvent alors former entre elles des angles soigneusement choisis. Ces bandes de renfort 4 peuvent être totalement ou partiellement superposées ou encore totalement disjointes entre elles. On entend ici que les bandes de renfort se recouvrent les unes sur les autres sur la totalité de leur surface ou sur une partie seulement de leurs surfaces respectives. Elles peuvent s'étendre sur tout ou partie de la surface de la pièce de structure hybride.

Le choix du nombre, de la position et de l'orientation des fibres des bandes de renfort 4 se fait en fonction de la localisation des efforts encaissés par la pièce hybride lors d'un choc, et résultent des calculs de résistance des matériaux réalisés pendant la phase d'étude. Lorsque les bandes de renfort sont superposées, les fibres unidirectionnelles continues formant chacune des bandes de renfort peuvent être orientées selon une même direction ou former entre elles des angles déterminés. Les bandes de renfort ainsi assemblées peuvent présenter une épaisseur allant de 2 mm à 6 mm. Les fibres unidirectionnelles peuvent aussi prendre la forme d'un tissu dans lequel une des directions de fil est orientée selon la direction principale de la pièce.

L'opération de pose et de soudage proprement dite s'effectue après avoir porté la surface de la couche 3 de matériau thermoplastique à une température proche de la température de fusion dudit matériau thermoplastique et la surface des bandes de renfort 4, à une température proche de la température de fusion de la matrice polymère enrobant les fibres unidirectionnelles continues de sorte que, lorsque les deux surfaces sont mises en contact, les matériaux fusionnent pour former une soudure. Cette mise en température de la surface de la bande peut se faire sur l'ensemble de la surface en rapprochant la bande d'une source de chaleur ou encore de manière locale, à l'aide d'un laser par exemple, au fur et à mesure de la dépose de la bande.

De manière à alléger le bilan thermique de cette opération, et améliorer la qualité de la liaison, il est préférable de procéder au soudage des bandes de renfort 4 immédiatement, ou dans un temps très court, après la sortie de la pièce métallique recouverte de la couche de matériau thermoplastique du moule d'injection 3, après avoir porté la surface des bandes de renfort entrant en contact avec la couche de matériau thermoplastique 3 à une température proche de la température de fusion de la matrice polymère enrobant les fibres unidirectionnelles continues. On entend ici par temps très court un temps inférieur à 30 secondes et préférentiellement inférieur à 15 secondes.

Dans le cas d'une fabrication en grande série, les opérations de chargement et de déchargement du moule d'injection peuvent se faire à l'aide d'un premier robot. Et les opérations de saisie, de positionnement, de pose et de soudure des bandes de renfort 4 peuvent être réalisées par un deuxième robot fonctionnant de manière synchrone avec le premier robot.

La figure 3 illustre une alternative d'exécution non couverte par l'invention, dans lequel la première couche moulée de matériau thermoplastique ou thermodurcissable 3 se présente sous la forme d'une nappe composite 31 comprenant des fibres imprégnées dans une matrice polymère.

La nappe composite 31 peut être réalisée par des procédés connus tels que les procédés RTM (Resin Transfer Molding : Moulage par transfert de résine), éventuellement à haute pression, par compression (par exemple par calandrage), sur des presses double-bande, par pultrusion ou tout autre procédé adapté, par exemple les procédés d'imprégnation par un monomère en phase de polymérisation.

Une telle nappe composite 31, outre ses propriétés de liaison entre la pièce de métal 2 et la bande de renfort 4, de manière similaire aux propriétés de la couche moulée 3, apporte également à la pièce de structure hybride finale 1 une capacité d'absorption d'énergie élevée, améliorant ainsi sa tenue aux chocs. En effet, la nappe de matériau composite 31 combine de nombreux modes de ruine lorsqu'elle est soumise à de fortes déformations, chaque mode de ruine absorbant de l'énergie.

Avantageusement, la nappe composite 31 peut comprendre une ou plusieurs couches de fibres courtes ou de fibres longues unidirectionnelles tissées ou non, lesdites fibres étant choisies, ici encore, parmi les fibres de verre, les fibres de carbone, les fibres de basalte, les fibres métalliques ou encore les fibres aramides. Le polymère enrobant ces fibres est également choisi pour être compatible chimiquement avec le matériau formant la matrice polymère des bandes de renfort et pour son aptitude à adhérer à la surface de la pièce de métal 2.

La mise en forme de la nappe composite 31 peut être réalisée préalablement à son application sur la pièce de métal 2.

Toutefois, une telle étape de mise en forme est avantageusement réalisée, après avoir introduit la pièce de métal 2 dans un moule, par thermocompression. Préalablement à son introduction dans le moule, la nappe composite 31 est chauffée à une température suffisante pour permettre son ramollissement, par exemple une température supérieure ou égale à la température de fusion du polymère de la nappe composite 31. La thermocompression ou l'estampage est alors réalisé après fermeture du moule, sous une pression efficace pour la mise en forme de la nappe de matériau composite. A titre d'exemple, la pression appliquée peut être de 80 à 170 bars, de préférence de 100 à 150 bars. Le moule peut éventuellement être maintenu à une température de 70 à 160° C de préférence de 80°C à 40°C, pendant l'application de la pression.

La mise en œuvre de cette deuxième alternative d'exécution du premier mode de mise en œuvre de l'invention s'applique de préférence lorsque la surface de la pièce de métal est peu tourmentée de manière à limiter les zones dans lesquelles la nappe composite 31 n'est pas apte à épouser en se déformant ladite surface de la pièce de métal.

A l'issue de l'étape de mise en forme de la nappe composite 31, l'ensemble formé de la pièce de métal recouverte d'une première couche de matériau thermoplastique ou thermodurcissable 31 est retiré du moule, et comme précédemment les nappes de renfort formées de fibres continues unidirectionnelles 4 sont appliquées avec les adaptations nécessaires et de façon similaire sur la couche de matériau thermoplastique ou thermodurcissable 31.

Une deuxième alternative d'exécution du premier mode de mise en œuvre de l'invention, illustré à la figure 4, consiste à combiner les deux alternatives précédentes et à réaliser une première et une deuxième couche de matériau thermoplastique ou thermodurcissable. La pièce de métal mise en forme 2 est introduite dans un moule d'injection avec une nappe composite 31 comprenant des fibres imprégnées dans une matrice formée d'un matériau polymère thermoplastique ou thermodurcissable qui après mise en forme par thermocompression ou par estampage à chaud dans le moule forme une première couche 31 de matériau polymère thermoplastique ou thermodurcissable. Une fois cette opération achevée, on injecte un matériau thermoplastique ou thermodurcissable identique ou différent du matériau de la nappe 31 pour former une deuxième couche 30. Ces deux couches forment ensemble une couche unique de matériau thermoplastique ou thermodurcissable 3, formée de deux couches, 30 et 31, réalisées l'une à la suite de l'autre.

A l'issue de cette opération, la pièce de métal comportant les deux couches de matériau thermoplastique ou thermodurcissable est extraite du moule et à l'identique de ce qui a été évoqué ci-dessus une ou plusieurs nappes de renfort 4 formées de fibres continues unidirectionnelles enrobées dans une matrice polymère sont déposées sur la couche de matériau thermoplastique ou thermodurcissable 3.

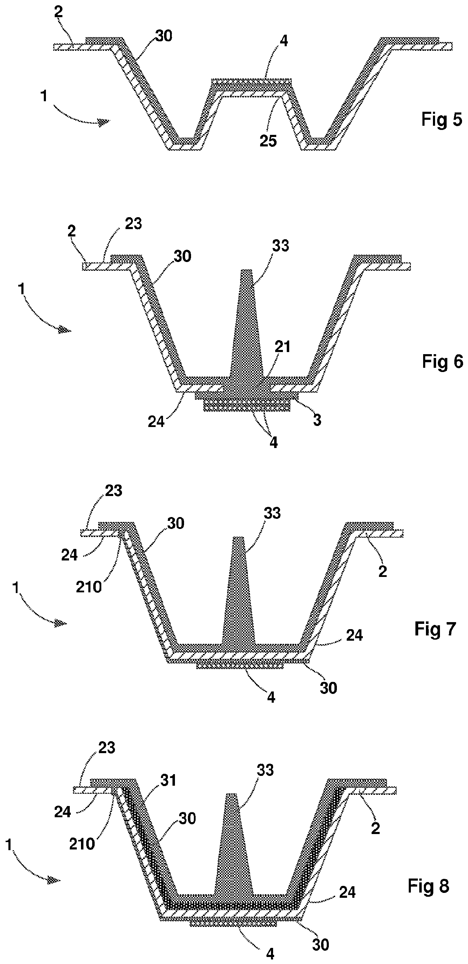

La figure 5 illustre une troisième alternative de réalisation du premier mode d'exécution de l'invention, dans laquelle la mise en œuvre du procédé s'avère particulièrement intéressante. La pièce de métal 2 comporte un embouti de renforcement 25, en forme de U inversé par rapport au U principal formé par la pièce de métal, préférentiellement longitudinal, et permettant d'augmenter la résistance mécanique de la pièce de métal 2. Cet embouti de renforcement 25 peut, dans certaines configurations, remplacer avantageusement les nervures de renforcement 31. Après moulage du matériau thermoplastique ou thermodurcissable 3, obtenu selon l'une des trois alternatives d'exécution du premier mode de mise en œuvre de l'invention décrites ci-dessus, la bande de renfort 4 peut alors être disposée avec précision sur le dos du U de l'embouti de renforcement 25.

Le deuxième mode de mise en œuvre de l'invention consiste à réaliser une couche moulée par injection de matériau thermoplastique sur tout ou partie de chacune des deux faces de la pièce de métal 2.

La figure 6 illustre une première alternative d'exécution du deuxième mode de réalisation de l'invention dans laquelle la pièce de métal 2 comprend un ou plusieurs orifices 21, disposés de sorte que, lors de l'étape b, le matériau thermoplastique ou thermodurcissable formant la couche moulée 30, s'écoule par l'intermédiaire de l'orifice 21, depuis la face 23 de la pièce de métal sur la face opposée 24.

Pour des raisons évidentes de tenue mécanique de la pièce hybride, les orifices 21 sont répartis, à des endroits choisis, sur toute la surface de la pièce de métal.

Le matériau thermoplastique ou thermodurcissable 30 formant la couche moulée de la face 23 est alors en continuité de matière au niveau de l'orifice 21 avec la couche moulée de la face 24.

Cet arrangement s'avère particulièrement utile lorsque la structure hybride comprend des nervures en matériau thermoplastique ou thermodurcissable 33. En effet, l'encombrement de ces nervures 33 ne permet pas de libérer une surface suffisante pour disposer les bandes de renfort 4 du côté de la face 23 de la pièce métal 2. Il est en revanche plus pratique de déposer ces bandes de renfort 4 sur la face 24, opposée à la face 23 supportant les nervures 33. Dans le cas illustré à la figure 6, dans lequel les orifices 21 sont disposés à titre exemple au centre de la pièce de métal, la continuité de la matière entre les couches moulées recouvrant les faces 23 et 24 permet d'assurer une meilleure tenue de la couche moulée par injection sur la pièce de métal 2, et une meilleure résistance mécanique de la pièce hybride.

Les nervures en matériau thermoplastique ou thermodurcissable 33 sont réalisées lors du moulage par injection de la couche moulée 30 et sont donc en continuité de matière avec cette dernière.

A titre d'illustration de ce qui a été énoncé précédemment, la pièce hybride de la figure 6 comporte deux bandes de renfort 4. Comme cela a déjà été indiqué ci-dessus, ces bandes de renfort peuvent se superposer partiellement ou en totalité.

La figure 7 illustre une deuxième alternative d'exécution du second mode de mise en œuvre de l'invention, dans lequel les orifices 210 permettant de faire passer, à l'étape b, le matériau thermoplastique ou thermodurcissable de la face 23 à la face 24, sont disposés sur un bord latéral de la pièce de métal. Des canaux d'écoulement peuvent utilement être aménagés dans les parois du moule d'injection ou de la pièce de métal 2. Ces orifices 210 peuvent également prendre la forme d'encoches réalisées sur le bord latéral de la pièce de métal.

Cette deuxième alternative, permet de disposer les orifices dans une zone de la pièce de métal moins sensible mécaniquement, afin d'éviter de placer des orifices dans la partie centrale de la pièce de métal comme cela est illustré à la figure 4.

La figure 8 illustre une troisième alternative d'exécution du second mode de mise en œuvre de l'invention, qui combine dans une même réalisation la deuxième alternative du premier mode de mise en œuvre de l'invention et la seconde alternative du second mode de mise en oeuvre de l'invention. Selon cette troisième alternative d'exécution du second mode de mise en œuvre de l'invention, la couche de matériau thermoplastique ou thermodurcissable 3 moulée sur la face 23 de la pièce de métal comporte une première couche formée par une nappe composite thermo-compressée ou estampée 31, et une deuxième couche injectée 30. Une nervure 33 est disposée dans le creux de la pièce de métal. La bande de renfort formée de fibres continues unidirectionnelles enrobées dans une matrice polymère 4 est disposée sur la face 24 de la pièce de métal comportant une couche 30 de matériau thermoplastique ou thermodurcissable injectée provenant de l'orifice 210.

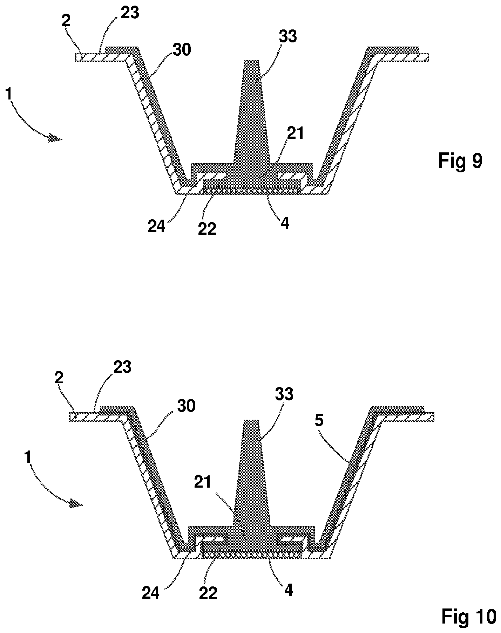

Selon une quatrième forme d'exécution du second mode de mise en œuvre de l'invention, la pièce de métal comporte des enfoncements 22. Les bandes de renfort 4 sont logées dans la partie concave des enfoncements 22, de manière à éviter des surépaisseurs localisées susceptibles de gêner l'intégration de la pièce hybride dans le véhicule. Un enfoncement de ce type est également illustré à la figure 9.

On observera que, lorsque la pièce de métal comporte un embouti de renforcement 25, tel que celui représenté à la figure 5, et que des orifices 21 ou 210 ont été préalablement disposés de manière adéquate, il est tout à fait possible de loger les bandes de renfort 4 dans le fond du U renversé dudit embouti de renforcement 25 qui fait alors office d'enfoncement. Et si cela s'avère nécessaire, la face 23 peut alors recevoir, une ou plusieurs nervures 33 moulées sur le dos du U renversé de l'embouti de renforcement 25.

Lorsque l'adhésion entre la pièce de métal 2 et la couche moulée 3 nécessite d'être renforcée, il est possible, selon un troisième mode de mise en œuvre de l'invention, de réaliser une préparation de la surface de la pièce de métal 2.

La préparation de surface peut prendre la forme d'une couche de liaison se présentant sous la forme d'une couche de matériau polymère 5 comme cela est illustré à la figure 10, ou d'un traitement mécanique ou chimique destiné à former des aspérités de surface. Cette préparation de surface se fait généralement directement sur la feuille de tôle, avant l'emboutissage de la pièce métallique et, au plus tard, avant l'exécution de l'étape b.

La couche de liaison 5 est une couche de matériau polymère compatible chimiquement avec le matériau thermoplastique ou thermodurcissable formant la couche moulée 3, et apte à solidariser ladite couche moulée 3 à la surface de la pièce de métal 2 dans des conditions prédéterminées de température. Le matériau de liaison est alors dit « thermoactivable ». On utilise aussi le terme anglais « hot-melt ». L'activation de ce matériau de liaison peut utilement se faire à la température de mise en forme ou d'injection du matériau thermoplastique ou thermodurcissable formant la couche moulée 3.

Le matériau de liaison peut être un matériau hot-melt choisi parmi les matériaux à base de copoly-ester ou à base de copolyamide, ou encore parmi les thermoplastiques élastomères à base de polyoléfine. A titre d'exemple non limitatif, ces matériaux sont commercialisés sous les appellations EMS Griltex^{®} CE20, EMS Griltex ^{®}CT100, Nolax Cox^{®} 391.

Le matériau de liaison peut aussi être un matériau apte à réticuler. Pour ce type de matériau, un ramollissement ultérieur n'est pas possible, notamment lors d'une exposition à une température prédéterminée pendant une durée donnée (avantageusement celle des conditions d'injection de la couche moulée ou d'un cycle de cataphorèse et peinture sur une ligne constructeur). Cela présente l'avantage de solidariser au moins partiellement la couche moulée 3 à la pièce de métal 2 avec un niveau de tenue permettant ensuite de passer dans toutes les étapes de chauffe de la chaine de fabrication du constructeur automobile.

Le matériau de liaison réticulable peut être choisi parmi les matériaux à base de co-polyamide, comprenant éventuellement un isocyanate, un époxyde, voire une polyoléfine. A titre d'exemple non limitatif, ces matériaux sont commercialisés sous les appellations Evonik^{®}, Vestamelt^{®} X1333-P1, Nolax^{®} HCM 555, Lohmann DuploTEC^{®}, Tesa HAF^{®}.

La dépose de cette couche de matériau de liaison 5 se fait en règle générale par pré-laminage ou par simple projection d'une couche de très faible épaisseur, à la manière d'une peinture.

Une variante de réalisation du troisième mode de mise en œuvre de l'invention (non illustrée) permettant de renforcer la liaison entre la couche moulée 3 et la pièce de métal 2, consiste à réaliser un traitement de la surface de la pièce de métal 2.

Pour ce faire, on réalise des aspérités de surface de la nappe de matériau métallique destinée à former la pièce de métal 2, ou sur la surface de la pièce de métal 2 elle-même. Ces aspérités de surface peuvent être obtenues par traitement laser ou plasma, par traitement chimique, par traitement mécanique tel qu'un ponçage ou un grenaillage, ou par tout autre moyen susceptible de créer des altérations superficielles ou à produire une texturation de la surface.

Avantageusement, le procédé d'obtention de cette pièce de structure hybride est celui décrit dans la présente demande, mais n'est pas limité audit procédé, et peut comprendre des étapes supplémentaires ou des variantes d'exécution non prévues dans l'invention.

Il est en effet tout à fait possible, au choix des concepteurs, de combiner les différentes variantes d'exécution des modes de mise en œuvre de l'invention ainsi que, comme cela a été exemplifié ci-dessus, les modes de mise en œuvre eux-mêmes.

L'invention concerne enfin une pièce de structure hybride de véhicule comprenant une pièce de métal 2 mise en forme, recouverte sur tout ou partie de la surface d'au moins une de ses faces d'une couche moulée 3 formée d'un matériau thermoplastique ou thermodurcissable sur laquelle sont déposées localement des bandes de renfort 4 formées de fibres continues unidirectionnelles enrobées dans une matrice polymère.

Préférentiellement, la pièce de métal comprend des orifices 21 ou 210, de sorte que les couches moulées 3 recouvrant chacune des faces (23, 24) de la pièce de métal 2 sont en continuité de matière au niveau des orifices 21 ou 210.

### NOMENCLATURE

1 Pièce de structure hybride.
2 Pièce de métal.
21 Orifice.
210 Orifice latéral.
22 Enfoncement.
23 Face de la pièce de métal comportant des nervures de renforcement.
24 Face de la pièce de métal opposée à la face comportant des nervures de renforcement.
25 Embouti de renforcement de la pièce de métal.
3 Couche moulée formée d'un matériau thermoplastique ou thermodurcissable.
30 Couche moulée par injection ou par thermocompression d'un matériau thermoplastique ou thermodurcissable.
31, Couche moulée par thermocompression d'une nappe composite comprenant des fibres imprégnées dans une matrice formée d'un matériau polymère thermoplastique ou thermodurcissable.
33 Nervures de renforcement en matériau thermoplastique ou thermodurcissable.
4 Bande de renfort formée de fibres continues unidirectionnelles enrobées dans une matrice polymère.
5 Couche de liaison.

## Revendications

1. Procédé de fabrication d'une pièce de structure hybride de véhicule automobile tel qu'il comprend les étapes au cours desquelles :
- étape a : on met en forme une nappe de matériau métallique pour former une pièce de métal (2),
- étape b : on réalise une ou plusieurs couches moulées (3, 30, 31) de matériau thermoplastique ou thermodurcissable recouvrant tout ou partie de la surface d'au moins une face (23, 24) de la pièce de métal,
une première couche moulée (3, 30) de matériau thermoplastique ou thermodurcissable étant une couche (30) moulée par injection, ou
une première couche moulée (3) étant une nappe composite (31) composée de fibres imprégnées dans une matrice polymère de matériau thermoplastique ou thermodurcissable mise en forme à chaud dans la pièce de métal (2) et une seconde couche moulée (30) de matériau thermoplastique ou thermodurcissable étant une couche de matériau moulée par injection sur toute ou partie de ladite première couche moulée (31),
et,
- étape c : on dépose localement, sur la couche moulée de matériau thermoplastique ou thermodurcissable (3) recouvrant tout ou partie d'au moins une des faces (23, 24) de la pièce de métal (2), des bandes de renfort (4) formées de fibres continues unidirectionnelles enrobées dans une matrice polymère.

2. Procédé de fabrication selon la revendication précédente, dans lequel la première couche moulée (3) est une nappe composite (31) composée de fibres imprégnées dans une matrice polymère de matériau thermoplastique ou thermodurcissable mise en forme à chaud dans la pièce de métal (2), et dans lequel on met en forme la nappe composite (31) par thermocompression ou par estampage à chaud de ladite nappe composite dans la pièce de métal (2).

3. Procédé de fabrication selon la revendication 1, dans lequel le matériau thermoplastique ou thermodurcissable moulé est un matériau chargé de fibres.

4. Procédé de fabrication selon l'une quelconque des revendications précédentes, dans lequel la pièce de métal (2) comprend un ou plusieurs orifices (21, 210), permettant, au cours de l'étape b, au matériau moulé (30) formant la première ou la deuxième couche moulée de matériau thermoplastique ou thermodurcissable (30) de s'écouler d'une face (23) à une autre (24), de sorte que les couches de matériau thermoplastique ou thermodurcissable (30) recouvrant chacune des faces (23, 24) de la pièce de métal (2) sont en continuité de matière au niveau desdits orifices (21, 210).

5. Procédé de fabrication selon l'une quelconque des revendications précédentes, dans lequel la couche moulée de matériau thermoplastique ou thermodurcissable (30) recouvrant une des faces (23) de la pièce de métal forme des nervures de renforcement (33).

6. Procédé de fabrication selon la revendication 4 en combinaison avec la revendication 5, dans lequel, au cours de l'étape c, on dépose les bandes de renfort sur la face (24) de la pièce de métal opposée à la face (23) comportant des nervures de renforcement (33).

7. Procédé de fabrication selon l'une quelconque des revendications précédentes, dans lequel les bandes de renfort (4) sont superposées partiellement ou en totalité les unes sur les autres.

8. Procédé de fabrication selon l'une quelconque des revendications précédentes, dans lequel les matériaux formant la couche moulée (3, 30, 31), et la matrice polymère enrobant les fibres continues unidirectionnelles de la bande de renfort (4) sont des matériaux compatibles, et dans lequel au cours de l'étape c, on porte la surface de ladite couche moulée (3, 30, 31) à une température proche de la température de fusion, et la surface des bandes de renfort (4) à une température proche de la température de fusion , de sorte que la couche moulée (3, 30, 31) et les bandes de renfort (4) sont liées par soudure.

9. Procédé de fabrication selon la revendication précédente, dans lequel on réalise l'étape c dans un laps de temps inférieur à 30 secondes, et préférentiellement inférieur à 15 secondes, suivant la réalisation de l'étape b.

10. Procédé de fabrication selon l'une quelconque des revendications précédentes, dans lequel la pièce de métal (2) comporte des enfoncements (22) localisés ou des emboutis de renforcement (25) à la surface desquels, au cours de l'étape c, on dépose lesdites bandes de renfort (4).

11. Procédé de fabrication selon l'une quelconque des étapes précédentes, dans lequel, préalablement à la réalisation de l'étape b, on recouvre au moins une face (23, 24) de la pièce de métal (2) d'une couche de liaison (5).

12. Procédé de fabrication selon la revendication précédente, dans lequel la couche de liaison (5) est formée par une couche de matériau polymère compatible chimiquement avec le matériau formant la couche moulée (3, 30, 31).

13. Procédé de fabrication selon l'une des revendications 1 à 10, dans lequel, préalablement à l'étape a ou b, on procède à un traitement de la surface de la feuille de métal de manière à créer des aspérités.

14. Pièce de structure hybride de véhicule automobile, pouvant être obtenue en mettant en oeuvre le procédé selon l'une quelconque des revendications précédentes, comprenant une pièce de métal (2) mise en forme, recouverte sur tout ou partie de la surface d'au moins une de ses faces d'une couche moulée (3) formée d'un matériau thermoplastique ou thermodurcissable sur laquelle sont déposées localement des bandes de renfort (4) formées de fibres continues unidirectionnelles enrobées dans une matrice polymère.

15. Pièce de structure selon la revendication précédente, dans laquelle la pièce de métal (2) comprend des orifices (21, 210), de sorte que les couches moulées (3, 30) recouvrant chacune des faces de la pièce de métal sont en continuité de matière au niveau desdits orifices (21, 210).

## Patentansprüche

1. Verfahren zur Herstellung eines Hybridstrukturteils eines Kraftfahrzeugs, das folgende Schritte aufweist:
- Schritt a: ein Blech aus metallischem Material wird zu einem Metallstück (2) geformt,
- Schritt b: es werden eine oder mehrere geformte Schichten (3, 30, 31) aus thermoplastischem oder wärmehärtbarem Material hergestellt, die die gesamte Oberfläche oder einen Teil davon auf mindestens einer Fläche (23, 24) des Metallstücks bedecken,
wobei eine erste geformte Schicht (3, 30) aus thermoplastischem oder wärmehärtbarem Material eine spritzgegossene Schicht (30) ist, oder
wobei eine erste geformte Schicht (3) eine Verbundbahn (31) ist, die aus Fasern besteht, die in einer Polymermatrix aus thermoplastischem oder wärmehärtbarem Material imprägniert sind, die in dem Metallteil (2) warm verformt wird und wobei eine zweite geformte Schicht (30) aus thermoplastischem oder wärmehärtbarem Material eine Materialschicht ist, die durch Injektion oder durch Thermokompression auf die gesamte oder einen Teil der ersten geformten Schicht (31) geformt wird,
und
- Schritt c: Verstärkungsstreifen (4), die aus unidirektionalen, kontinuierlichen Fasern, die mit einer Polymermatrix beschichtet sind, gebildet sind, werden lokal auf die geformte Schicht aus thermoplastischem oder wärmehärtbarem Material (3) aufgebracht, die mindestens eine der Seiten (23, 24) des Metallteils (2) ganz oder teilweise bedeckt.

2. Verfahren zur Herstellung nach dem vorhergehenden Anspruch, bei dem die erste geformte Schicht (3) eine Verbundbahn (31) ist, die aus Fasern besteht, die in einer Polymermatrix aus thermoplastischem oder wärmehärtbarem Material imprägniert sind, die in dem Metallteil (2) warm verformt wird, und bei dem die Verbundbahn (31) durch Thermokompression oder durch Heißprägen der Verbundbahn in das Metallteil (2) geformt wird.

3. Verfahren zur Herstellung nach Anspruch 1, wobei das geformte thermoplastische oder wärmehärtbare Material ein fasergefülltes Material ist.

4. Verfahren zur Herstellung nach einem der vorhergehenden Ansprüche, wobei das Metallteil (2) eine oder mehrere Öffnungen (21, 210) aufweist, die es während des Schritts b ermöglichen, dass geformtes Material (30), das die erste oder zweite geformte Schicht aus thermoplastischem oder wärmehärtbarem Material (30) bildet, von einer Seite (23) zu einer anderen (24) fließt, so dass die Schichten aus thermoplastischem oder wärmehärtbarem Material (30), die jede der Seiten (23, 24) des Metallteils (2) bedecken, in materieller Kontinuität an diesen Öffnungen (21, 210) sind.

5. Verfahren zur Herstellung nach einem der vorhergehenden Ansprüche, wobei die geformte Schicht aus thermoplastischem oder wärmehärtbarem Material (30), die eine der Flächen (23) des Metallteils bedeckt, Verstärkungsrippen (33) bildet.

6. Verfahren zur Herstellung nach Anspruch 4 in Verbindung mit Anspruch 5, bei dem in Schritt c die Verstärkungsstreifen auf der Fläche (24) des Metallteils aufgebracht werden, die der Fläche (23), die die Verstärkungsrippen (33) aufweist, gegenüberliegt.

7. Verfahren zur Herstellung nach einem der vorhergehenden Ansprüche, wobei die Verstärkungsstreifen (4) teilweise oder vollständig übereinandergelegt werden.

8. Verfahren zur Herstellung nach einem der vorhergehenden Ansprüche, wobei die Materialien, die die geformte Schicht (3, 30, 31) bilden, und die Polymermatrix, die die unidirektionalen, kontinuierlichen Fasern des Verstärkungsstreifens (4) beschichtet, kompatible Materialien sind, und wobei in Schritt c die Oberfläche der geformten Schicht (3, 30, 31) mit einer Temperatur nahe der Schmelztemperatur aufgebracht wird, und die Oberfläche des Verstärkungsstreifen (4) mit einer Temperatur nahe der Schmelztemperatur aufgebracht wird, so dass die geformte Schicht (3, 30, 31) und die Verstärkungsstreifen (4) durch Schweißen verbunden sind.

9. Herstellungsverfahren nach dem vorhergehenden Anspruch, bei dem Schritt c in einer Zeitspanne von weniger als 30 Sekunden, vorzugsweise weniger als 15 Sekunden, nach der Durchführung von Schritt b durchgeführt wird.

10. Verfahren zur Herstellung nach einem der vorhergehenden Ansprüche, wobei das Metallteil (2) lokalisierte Vertiefungen (22) oder Verstärkungsstanzteile (25) aufweist, auf deren Oberfläche in Schritt c die Verstärkungsstreifen aufgebracht werden.

11. Verfahren zur Herstellung gemäß einem der vorhergehenden Ansprüche, bei dem vor der Durchführung von Schritt b mindestens eine Seite (23, 24) des Metallteils (2) mit einer Verbindungsschicht (5) bedeckt wird.

12. Verfahren zur Herstellung nach dem vorhergehenden Anspruch, wobei die Verbindungsschicht (5) durch eine Schicht aus polymerem Material gebildet wird, das chemisch mit dem die geformte Schicht (3, 30, 31) bildenden Material kompatibel ist.

13. Verfahren zur Herstellung nach einem der Ansprüche 1 bis 10, bei dem vor Schritt a oder b eine Oberflächenbehandlung des Metallblechs durchgeführt wird, um Unebenheiten zu erzeugen.

14. Hybridstrukturteil eines Kraftfahrzeugs, das durch Ausführen des Verfahrens nach einem der vorhergehenden Ansprüche erhalten werden kann, umfassend ein geformtes Metallteil (2), das auf der gesamten oder einem Teil der Oberfläche mindestens einer seiner Seiten mit einer geformten Schicht (3) aus einem thermoplastischen oder wärmehärtbaren Material bedeckt ist, auf der lokal Verstärkungsstreifen (4) aus unidirektionalen, kontinuierlichen Fasern, die mit einer Polymermatrix beschichtet sind, aufgebracht sind.

15. Strukturteil nach dem vorhergehenden Anspruch, wobei das Metallteil (2) Löcher (21, 210) aufweist, so dass die geformten Schichten (3, 30), die jede der Flächen des Metallteils bedecken, an den Löchern (21, 210) eine Materialkontinuität aufweisen.

## Claims

1. Method for manufacturing a hybrid structural part of a motor vehicle, wherein it comprises the following steps, during which:
- step a: a sheet of metal material is shaped to form a metal part (2),
- step b: one or more molded layers (3, 30, 31) made of thermoplastic or thermosetting material are produced, which layers cover all or part of the surface of at least one face (23, 24) of the metal part,
a first molded layer (3, 30) made of thermoplastic or thermosetting material being an injection-molded layer, or
a first molded layer (3) being a composite sheet (31) composed of fibers impregnated in a polymer matrix, made of thermoplastic or thermosetting material and hot-shaped in the metal part (2) and a second molded layer (30) made of thermoplastic or thermosetting material is a layer of material that is injection-molded or thermocompression-molded over all or part of said first molded layer (31),
and
- step c: reinforcing strips (4), formed from unidirectional continuous fibers encased in a polymer matrix, are placed locally on the molded layer which is made of thermoplastic or thermosetting material (3) and which covers all or part of at least one of the faces (23, 24) of the metal part (2).

2. Manufacturing method according to the preceding claim, wherein the first layer is being a composite sheet (31) composed of fibers impregnated in a polymer matrix, made of thermoplastic or thermosetting material and hot-shaped in the metal part (2) and wherein the composite sheet (31) is shaped by thermocompression or by hot-stamping of said composite sheet in the metal part (2).

3. Manufacturing method according to claim 1, wherein the molded thermoplastic or thermosetting material is a fiber-filled material.

4. Manufacturing method according to any of the preceding claims, wherein the metal part (2) comprises one or more openings (21, 210) which, during step b, allow the molded material (30) that forms the first or the second molded layer made of thermoplastic or thermosetting material (30) to flow from one face (23) to another (24), such that the material of the layers of thermoplastic or thermosetting material (30) which cover each of the faces (23, 24) of the metal part (2) is continuous at said openings (21, 210).

5. Manufacturing method according to any of the preceding claims, wherein the molded layer made of thermoplastic or thermosetting material (30) which covers one of the faces (23) of the metal part forms reinforcing ribs (33).

6. Manufacturing method according to claim 4 in combination with claim 5, wherein, during step c, the reinforcing strips are placed on the face (24) of the metal part which is opposite the face (23) that comprises reinforcing ribs (33).

7. Manufacturing method according to any of the preceding claims, wherein the reinforcing strips (4) partially or completely overlap each other.

8. Manufacturing method according to any of the preceding claims, wherein the materials forming the molded layer (3, 30, 31) and the polymer matrix encasing the continuous unidirectional fibers of the reinforcing strip (4) are compatible materials, and wherein, during step c, the surface of said molded layer (3, 30, 31) is brought to a temperature close to the melting temperature, and the surface of the reinforcing strips (4) is brought to a temperature close to the melting temperature, such that the molded layer (3, 30, 31) and the reinforcing strips (4) are bonded by welding.

9. Manufacturing method according to the preceding claim , wherein step c is carried out in a period of less than 30 seconds, and preferably less than 15 seconds, following the completion of step b.

10. Manufacturing method according to any of the preceding claims, wherein the metal part (2) comprises localized indentations (22) or reinforcement stampings (25) on the surface of which said reinforcing strips (4) are placed during step c.

11. Manufacturing method according to any of the preceding steps, wherein, prior to carrying out step b, at least one face (23, 24) of the metal part (2) is covered by a bonding layer (5).

12. Manufacturing method according to the preceding claim, wherein the bonding layer (5) is formed by a layer of polymeric material which is chemically compatible with the material that forms the molded layer (3, 30, 31).

13. Manufacturing method according to any of claims 1 to 10, wherein, prior to step a or b, the surface of the metal sheet is treated so as to create roughness.

14. Hybrid structural part of a motor vehicle, which can be obtained by implementing the method according to any of the preceding claims, comprising a shaped metal part (2) that is covered over all or part of the surface of at least one of its faces by a molded layer (3) formed from a thermoplastic or thermosetting material, on which reinforcing strips (4) formed by continuous unidirectional fibers coated in a polymer matrix are locally placed.

15. Structural part according to the preceding claim, wherein the metal part (2) comprises openings (21, 210), such that the material of the molded layers (3, 30) that cover each of the faces of the metal part is continuous at said openings (21, 210).
